# EUROPÄISCHE PATENTANMELDUNG

(11) **EP 3 187 426 A1**
(43) Veröffentlichungstag der Anmeldung: **05.07.2017**
(21) Anmeldenummer: 15202814.8
(22) Anmeldetag: 28.12.2015
(51) Int. Cl.: B65B 39/02, B65B 39/14, B65B 3/04, B65B 7/16, B65B 9/04, B65B 47/00, B29C 51/04, B29C 51/20, B65B 39/00

(54) **VERPACKUNGSMASCHINE**

(71) Anmelder: MULTIVAC Sepp Haggenmüller SE & Co. KG, 87787 Wolfertschwenden (DE)
(72) Erfinder: LAU, Christian, 88178 Heimenkirch (DE); EHRMANN, Elmar, 87730 Bad Grönenbach (DE)
(74) Vertreter: Grünecker Patent- und Rechtsanwälte PartG mbB

(57) **Zusammenfassung**

Die Erfindung bezieht sich auf eine Verpackungsmaschine (1), umfassend eine Formstation (2) zum Formen von Behältern (6) in eine Unterfolienbahn (7), eine Siegelstation (3) zum luftdichten Verschließen der Behältern (6) mittels einer Deckelfolie (15) und eine Füllvorrichtung (8) zum Füllen der Behältern (6) mit einem flüssigen bis pastösen Produkt (9), sowie auf ein Verfahren zum Betrieb einer solchen Verpackungsmaschine (1).

## Beschreibung

Die Erfindung bezieht sich auf eine Verpackungsmaschine gemäß dem Anspruch 1, sowie auf ein Verfahren mit den Merkmalen des Anspruchs 10.

Aus der CH 323481 ist eine Schlauchbeutelmaschine bekannt, die offene Beutel, die innerhalb einer Siegelvorrichtung geformt wurden, mit einem pastösen Produkt füllt, bevor der Siegelvorgang erfolgt. Hier sind nur zu 100% gefüllte und somit keine teilgefüllten Beutel herstellbar. Solche Beutelverpackungen sind beispielsweise für Wasser- oder Saftbehälter, wie sie in Flugzeugen ausgegeben werden, nicht einsetzbar.

Zum Herstellen solcher Drinkbehälter sind Tiefziehverpackungsmaschinen bekannt, die zum Verpacken von Wasser oder auch anderen flüssigen oder pastösen Produkte im Einsatz sind. Da diese Verpackungsmaschinen intermittierend bzw. getaktet arbeiten und die mit dem Produkt gefüllten Behälter von der Füllstation in die Siegelstation transportiert werden, müssen hierbei die Geschwindigkeiten und Beschleunigungen so begrenzt werden, dass ein Überschwappen des Produkts über den Behälter verhindert wird. Die Leistung solcher Tiefziehverpackungsmaschinen ist gegenüber solchen, die feste Produkte verpacken, verhältnismäßig gering.

Aus der DE 2 052 551 ist eine Abfüllmaschine bekannt, bei der eine Folienbahn kontinuierlich mit einer konstanten Geschwindigkeit entlang von in der Folientransportrichtung bewegbaren Arbeitsstationen wie Heizstation, Formstation, Füllstation, Verschließstation und Vereinzelungsstation transportiert wird. Alle Arbeitsstationen führen ihre Funktion aus, während sich die Arbeitsstation synchron mit der Folienbahn bewegt. So kann durch fehlende Beschleunigungen und Verzögerungen ein "Herausschwappen" verhindert werden. Der konstruktive und steuerungstechnische Aufwand von solchen verfahrbaren Arbeitsstationen ist allerdings sehr hoch.

Aufgabe der Erfindung ist es, die Leistung einer Verpackungsmaschine zum Verpacken von flüssigen oder pastösen Produkten zu steigern.

Diese Aufgabe wird gelöst durch eine Verpackungsmaschine, vorzugsweise eine Tiefziehverpackungsmaschine oder eine Schalenverschließmaschine, gemäß dem Oberbegriff das Anspruch 1 bzw. durch ein Verfahren mit den Merkmalen des Anspruchs 10. Vorteilhafte Weiterbildungen der Erfindung sind in den Unteransprüchen angegeben.

Die erfindungsgemäße Verpackungsmaschine umfasst eine Siegelstation zum luftdichten Verschließen der Behälter mittels einer Deckelfolie und eine Füllvorrichtung zum Füllen der Behälter mit einem flüssigen bis pastösen Produkt. Die erfindungsgemäße Verpackungsmaschine zeichnet sich dadurch aus, dass die Füllvorrichtung einen zum Befüllen der Behälter in die Siegelstation hineinbewegbaren und (um ein Verschließen der Behälter zu ermöglichen) aus der Siegelstation herausbewegbaren Füllkopf aufweist. Dabei können die Behälter auf vorteilhafte Weise in der Siegelstation im Ruhezustand gefüllt und ohne einen weiteren Vorzug noch in der Siegelstation geschlossen werden. Somit sind hohe Beschleunigungen und Geschwindigkeiten beim intermittierenden Folien- bzw. Behältervorschub möglich, da das Produkt nicht mehr herausschwappen kann, da die vollständig gefüllten Behälter mit der Deckelfolie dicht verschlossen werden, bevor diese aus der Siegelstation wieder heraustransportiert werden. An dem Füllkopf sind mehrere Fülldüsen vorgesehen (wobei dieser Begriff auch einfache Füllöffnungen umfasst). Wenigstens einige oder sogar alle Fülldüsen befinden sich im Betrieb der Verpackungsmaschine zwischen dem Siegelwerkzeug und den zu befüllenden Behältern, wenn sich die Füllvorrichtung in ihrer in die Siegelstation hinein bewegten Stellung befindet. Die betreffenden Fülldüsen befinden sich mit anderen Worten in dieser Stellung unterhalb des beheizbaren Siegelwerkzeugs und gleichzeitig oberhalb der zu befüllenden Behälter. Auf diese Weise können die innerhalb der Siegelstation befindlichen Behälter sicher befüllt werden.

Dabei ist vorzugsweise der Füllkopf zumindest weitestgehend horizontal bewegbar, um einen möglichst geringen Oberhub für ein Siegelwerkzeugoberteil zu benötigen.

Die horizontale Bewegung des Füllkopfs ist bevorzugt in und gegen eine Folientransportrichtung vorgesehen.

In einer besonders vorteilhaften Ausführung ist die Füllvorrichtung dazu konfiguriert, die Behälter bereits stromaufwärts der Siegelstation teilweise zu befüllen und in der Siegelstation fertig zu füllen. So kann vor allem bei pastösen Produkten die Füllzeit in der Siegelstation durch die teilweise Vorabfüllung verringert werden.

Der Füllkopf weist bevorzugt an seinem vorderen Ende eine Gleitvorrichtung für die Deckelfolie auf, um bei einer Berührung keine Schäden an der Deckelfolie zu verursachen.

Vorzugsweise weist der Füllkopf für jeden zu füllenden Behälter eine Fülldüse auf.

Die Fülldüsen sind bevorzugt jeweils mittig über dem jeweiligen Behälter vorgesehen.

Vorzugsweise umfasst die Verpackungsmaschine eine Formstation zum Formen von Behältern in eine Unterfolienbahn.

Die erfindungsgemäße Verpackungsmaschine ist vorzugsweise eine intermittierend arbeitende Tiefziehverpackungsmaschine.

Die Siegelstation weist vorzugsweise ein Siegelwerkzeugoberteil mit einem Oberhub auf, um dem Füllkopf einen kollisionsfreien Raum zum Einfahren in die Siegelstation und damit unter das Siegelwerkzeugunterteil zu gewähren.

Ein erfindungsgemäßes Verfahren zum Betrieb einer solchen Verpackungsmaschine zeichnet sich dadurch aus, dass sowohl ein Komplettieren (d.h. endgültiges Befüllen) der Behälter mit dem Produkt als auch das anschließende Verschließen der Behälter mittels der Deckelfolie innerhalb der Siegelstation erfolgt. So kann bei einer Tiefziehverpackungsmaschine ein schneller Vorzug der Unterfolienbahn oder alternativ bei einer Schalenverschließmaschine eine schnelle Schalenzuführung erfolgen, da, solange die noch unverschlossenen Mulden bzw. Schalen transportiert werden, entweder kein Produkt in der Mulde bzw. Schale vorhanden ist oder maximal eine teilweise Befüllung und ein Herausschwappen nicht auftritt, so dass im Gesamten die Leistung der Verpackungsmaschine gesteigert werden.

Vorzugsweise wird dabei das Produkt ausschließlich innerhalb der Siegelstation in die Behälter gefüllt, oder teilweise in einem Arbeitstakt unmittelbar vor dem Versiegelungs-Arbeitstakt oder teilweise während des Vorzugs der Unterfolienbahn in die Siegelstation.

In einer vorteilhaften Ausführung erfolgt die Bewegung des Füllkopfs in die Siegelstation synchron mit dem Vorzug der Unterfolienbahn.

Im Folgenden wird ein vorteilhaftes Ausführungsbeispiel der Erfindung anhand einer Zeichnung näher dargestellt. Im Einzelnen zeigen:
Fig. 1: eine schematische Seitenansicht einer erfindungsgemäßen Verpackungsmaschine,
Fig. 2: eine schematische Teilansicht der Siegelstation während eines Füllvorgangs und
Fig. 3: die Ansicht von Fig. 2 während eines Siegelvorgangs.

Gleiche Komponenten sind in den Figuren durchgängig mit gleichen Bezugszeichen versehen worden.

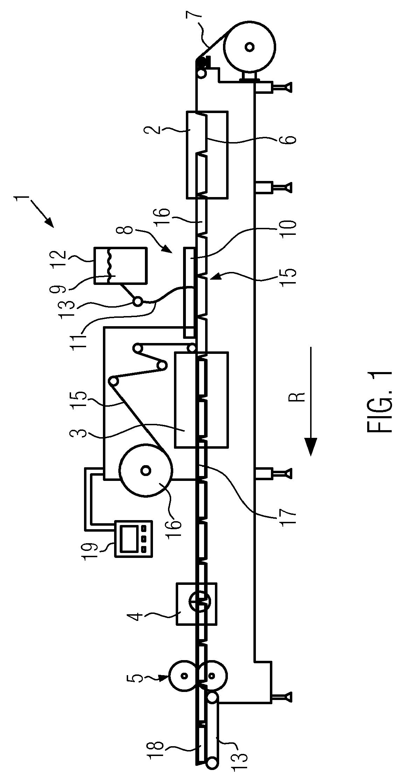

Figur 1 zeigt eine intermittierend arbeitende Verpackungsmaschine 1, hier eine Tiefziehverpackungsmaschine, mit einer Produktionsrichtung R. Die Tiefziehverpackungsmaschine 1 weist eine Formstation 2, eine Siegelstation 3, eine Querschneidstation 4 und eine Längsschneidstation 5 auf, die in dieser Reihenfolge in der Produktionsrichtung R angeordnet sind. Die Formstation 2 formt mehrere Mulden 6, die als Behälter fungieren, in eine Unterfolienbahn 7. Eine nicht näher dargestellte Vorschubeinrichtung zum Erfassen und Transportieren der Unterfolienbahn 7 entlang der Arbeitsstationen 2, 3, 4, und 5 umfasst zwei beidseitig der Unterfolienbahn 7 angeordnete Klammerketten. Die geformten Behälter 6 werden in die Siegelstation 3 transportiert und dort mittels einer stromaufwärts der Siegelstation 3 angeordneten Füllvorrichtung 8 mit einem flüssigen bis pastösen Produkt 9 befüllt. Die Füllvorrichtung 8 umfasst einen weitestgehend horizontal bewegbaren Füllkopf 10 und eine Verbindungsleitung 11 zu einem Produktbehälter 12, aus dem das Produkt 9 mittels einer Pumpe 13 zum Füllkopf 10 gefördert wird.

In der Siegelstation 3 wird nach dem Befüllen eine Deckelfolie 15, die von einem Materialspeicher 16 abgezogen wird, auf die Behälter 6 bzw. die Unterfolienbahn 7 gesiegelt, um luftdichte Behälter 17 bzw. Packungen zu erzeugen. In den Schneidstationen 4, 5 werden die versiegelten Behälter 17 aus dem Folienverbund von Unterfolienbahn 7 und Deckelfolie 15 ausgetrennt, um einzelne Verpackungen 18 zu erhalten. Eine Steuerung 19 steuert alle in der Tiefziehverpackungsmaschine 1 laufenden Prozesse.

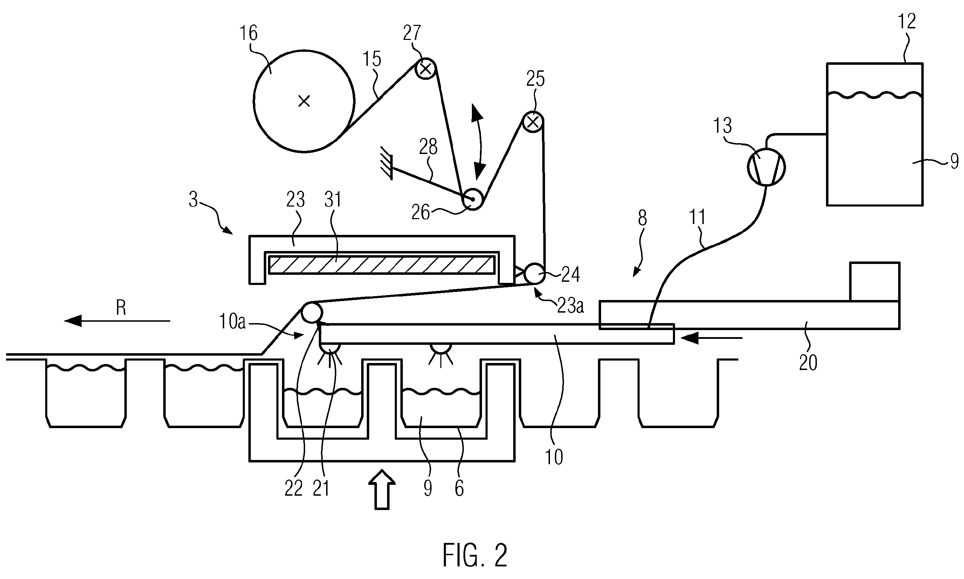

Fig. 2 zeigt eine schematische Teilansicht der Siegelstation 3 während eines Füllvorgangs, anhand derer die Funktionsweise der Füllvorrichtung 8 näher erläutert wird. Die Füllvorrichtung 8 weist einen sich in Produktionsrichtung R erstreckenden Füllkopf 10 auf, der an einem Linearantrieb 20 angeordnet in die Siegelstation 3 hinein (vorzugsweise synchron mit einem intermittierenden Vorzug der Unterfolienbahn 7) und aus der Siegelstation 3 herausbewegt wird. Der Füllkopf 10 selbst weist mehrere Fülldüsen 21 auf, wobei jeweils eine Fülldüse 21 jeweils einem in der Siegelstation 3 befindlichen Behälter 6 zugeordnet ist. Die Fülldüsen 21 sind über den Füllkopf 10 und die Verbindungsleitung 11 mit dem Produktbehälter 12 verbunden und eine zwischengeschaltete Pumpe 13 fördert das Produkt 9 zu den Fülldüsen 21. Vor den Fülldüsen 21 können noch ein oder mehrere Ventile oder Dosierventile vorgesehen sein.

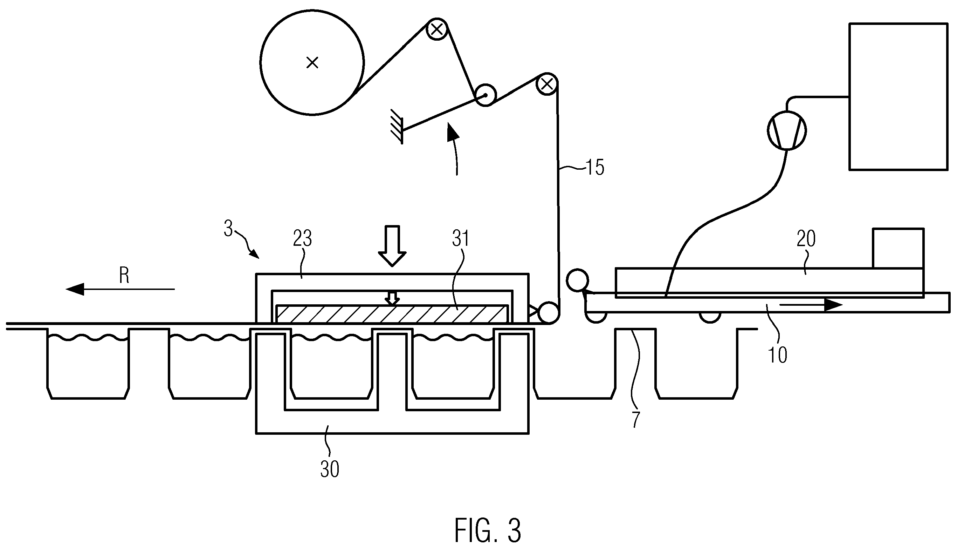

Der Füllkopf 10 weist an seinem vorderen Ende 10a eine Gleitvorrichtung 22 beispielsweise in Form einer Rolle auf, um die Deckelfolie 15, die an den stromabwärts befindlichen Behältern 17 angesiegelt ist und stromaufwärts an einem Siegelwerkzeugoberteil 23 nach oben verläuft, wegdrücken zu können, ohne dabei die Deckelfolie 15 zu beschädigen. Die Deckelfolie 15 verläuft stromaufwärts an einer Rolle 24 an einer Kante 23a des Siegelwerkzeugoberteils 23 nach oben an eine erste Umlenkrolle 25, von dort über eine bewegliche Tänzerrolle 26 über eine zweite Umlenkrolle 27 zum Materialspeicher 16. Die Tänzerrolle 26 ist an einem schwenkbaren Hebel 28 angebracht, um die beim Wegdrücken der Deckelfolie 15 während des Hineinbewegens des Füllkopfs 10 unter das Siegelwerkzeugoberteil 23 bzw. in die Siegelstation 3 entstehende Erhöhung der Folienspannung auszugleichen, indem die Deckelfolie 15 zur Siegelstation 3 nachgezogen werden kann. Ebenso wird die Tänzerrolle 26 weiter nach oben ausgelenkt, während das Siegelwerkzeugoberteil 23 nach dem Füllvorgang nach unten in eine geschlossene Stellung der Siegelstation 3 bewegt wird (siehe Fig. 3).

In der Arbeitsstellung des Füllkopfs 10, wie in Fig. 2 dargestellt, werden die Behälter 6 jeweils über eine ihnen zugeordnete Fülldüse 21 mit dem Produkt 9 solange gefüllt, bis alle Behälter 6, die sich innerhalb der Siegelstation 3 befinden, den gewünschten Füllgrad erreicht haben. In dieser Arbeitsstellung, in der der Füllkopf 10 maximal in die Siegelstation 3 hineingefahren ist, befinden sich alle oder zumindest die zum letztendlichen, kompletten Befüllen der Behälter 6 vorgesehenen Fülldüsen 21 unterhalb eines beheizbaren Siegelwerkzeugs 31 der Siegelstation 3 und oberhalb der zu befüllenden Behälter 6, d.h. in vertikaler Richtung zwischen dem Siegelwerkzeug 31 und den Behältern 6. Dabei ist jedem Behälter 6 eine eigene Fülldüse bzw. Füllöffnung 21 zugeordnet. Die Behälter 6 können bereits vor dem Einfahren in die Siegelstation 3 teilgefüllt sein oder erst komplett innerhalb der Siegelstation 3 gefüllt werden.

Figur 3 zeigt die Teilansicht von Fig. 2 während eines Siegelvorgangs. Nach dem Füllvorgang zieht der Linearantrieb 20 den Füllkopf 10 entgegen der Produktionsrichtung R aus der Siegelstation 3 heraus, damit das Siegelwerkzeugoberteil 23 mittels eines Oberhubs von oben nach unten an ein Siegelwerkzeugunterteil 30 bewegt werden kann. Damit bilden das Siegelwerkzeugunterteil 30 und das Siegelwerkzeugoberteil 23 eine Kammer, indem beide Werkzeuge 23, 30 ringsumlaufend die Deckelfolie 15 und die Unterfolienbahn 7 einklemmen. Die Kammer kann evakuiert und/oder begast werden, bevor das als erwärmte Siegelplatte ausgebildete Siegelwerkzeug 31 im Siegelwerkzeugoberteil 23 die Deckelfolie 15 an die Unterfolienbahn 7 luftdicht siegelt.

Um die Behälter 6 schon teilweise vorzufüllen, bevor sie beim nächsten Folienvorzug in die Siegelstation 3 hinein transportiert werden, könnte eine solche Teilbefüllung der beiden Behälter 6, die sich unmittelbar vor der Siegelstation 3 befinden, in der in Figur 3 gezeigten Stellung des Füllkopfs 10 erfolgen.

Unter dem Füllen der Behälter mit einem flüssigen bis pastösen Produkt 9 ist nur zu verstehen, dass zumindest das endgültige Befüllen der Behälter 6 innerhalb der Siegelstation 3 mit einem solchen Produkt 9 geschieht. Dies schließt aber keinesfalls aus, dass vorher auch feste oder zumindest festere Produktteile in die Behälter 6 geladen werden (wie beispielsweise Nudeln oder Spätzle, die dann innerhalb der Siegelstation 3 um eine Soße als pastöses Produkt 9 ergänzt werden).

## Patentansprüche

1. Verpackungsmaschine (1), umfassend eine Siegelstation (3) zum luftdichten Verschließen von Behältern (6) mittels einer Deckelfolie (15) und eine Füllvorrichtung (8) zum Füllen der Behälter (6) mit einem flüssigen bis pastösen Produkt (9), wobei innerhalb der Siegelstation (3) ein beheizbares Siegelwerkzeug (31) angeordnet ist, **dadurch gekennzeichnet, dass** die Füllvorrichtung (8) einen zum Befüllen der Behälter (6) in die Siegelstation (3) hinein bewegbaren und vor einem Verschließen der Behälter (6) aus der Siegelstation (3) herausbewegbaren Füllkopf (10) aufweist, dass an dem Füllkopf (10) mehrere Fülldüsen (21) vorhanden sind, und dass sich die Fülldüsen (21) in einer in die Siegelstation (3) hinein bewegten Stellung des Füllkopfs (10) zwischen dem Siegelwerkzeug (31) und den zu befüllenden Behältern (6) angeordnet sind.

2. Verpackungsmaschine nach Anspruch 1, **dadurch gekennzeichnet, dass** der Füllkopf (10) zumindest weitestgehend horizontal bewegbar ist.

3. Verpackungsmaschine nach Anspruch 2, **dadurch gekennzeichnet, dass** die horizontale Bewegung des Füllkopfs (10) in und gegen eine Folientransportrichtung (R) vorgesehen ist.

4. Verpackungsmaschine nach einem der vorangehenden Ansprüche, **dadurch gekennzeichnet, dass** die Füllvorrichtung (8) dazu konfiguriert ist, die Behälter (6) bereits stromaufwärts der Siegelstation (3) teilweise zu befüllen und in der Siegelstation (3) fertig zu füllen.

5. Verpackungsmaschine nach einem der vorangehenden Ansprüche, **dadurch gekennzeichnet, dass** der Füllkopf (10) an seinem vorderen Ende (10a) eine Gleitvorrichtung (22) für die Deckelfolie (15) aufweist.

6. Verpackungsmaschine nach einem der vorangehenden Ansprüche, **dadurch gekennzeichnet, dass** der Füllkopf (10) für jeden zu befüllenden Behälter (6) eine Fülldüse (21) aufweist.

7. Verpackungsmaschine nach Anspruch 6, **dadurch gekennzeichnet, dass** die Fülldüsen (21) jeweils mittig über dem jeweiligen Behälter (6) vorgesehen sind.

8. Verpackungsmaschine nach einem der vorangehenden Ansprüche, **dadurch gekennzeichnet, dass** die Verpackungsmaschine (1) eine Formstation (2) zum Formen der Behälter (6) in eine Unterfolienbahn (7) umfasst.

9. Verpackungsmaschine nach einem der vorangehenden Ansprüche, **dadurch gekennzeichnet, dass** die Siegelstation (3) ein Siegelwerkzeugoberteil (23) mit einem Oberhub aufweist.

10. Verfahren zum Betrieb einer Verpackungsmaschine (1) gemäß einem der vorangehenden Ansprüche, **dadurch gekennzeichnet, dass** sowohl ein abschließendes Befüllen der Behälter (6) mit dem Produkt (9) als auch das anschließende Verschließen der Behälter (6) mittels der Deckelfolie (15) innerhalb der Siegelstation (3) erfolgt.

11. Verfahren nach Anspruch 10, **dadurch gekennzeichnet, dass** das Produkt (9) nur innerhalb der Siegelstation (3) in die Behälter (6) gefüllt wird oder teilweise in einem vorherigen Arbeitstakt oder teilweise während eines Vorzugs der Unterfolienbahn (7) in die Siegelstation (3).

12. Verfahren nach einem der Ansprüche 10 oder 11, **dadurch gekennzeichnet, dass** eine Bewegung des Füllkopfs (10) in die Siegelstation (3) synchron mit dem Vorzug der Unterfolienbahn (7) erfolgt.
